# EUROPÄISCHE PATENTANMELDUNG

(11) **EP 2 202 533 A1**
(43) Veröffentlichungstag der Anmeldung: **30.06.2010**
(21) Anmeldenummer: 08022431.4
(22) Anmeldetag: 23.12.2008
(51) Int. Cl.: G01S 7/481, G01S 17/42, G02B 26/10

(54) **Erfassungsvorrichtung**

(71) Anmelder: IBEO Automobile Sensor GmbH, 22143 Hamburg (DE)
(72) Erfinder: Kiehn, Michael, 21039 Hamburg (DE); Aikio, Mauri, 90450 Kempele (FI); Aikio, Mika, 90570 Oulu (FI)
(74) Vertreter: Manitz, Finsterwald & Partner GbR

(57) **Zusammenfassung**

Die Erfindung betrifft eine Vorrichtung zur ortsaufgelösten Erfassung von in einem Überwachungsbereich befindlichen Gegenständen, mit einer Sendeeinrichtung zur Aussendung von elektromagnetischer Strahlung in einem Sendebereich, mit einer Empfangseinrichtung zum Empfang von aus einem Empfangsbereich reflektierter Strahlung, wobei sich der Sendebereich und der Empfangsbereich in einem innerhalb des Überwachungsbereiches gelegenen und einen Erfassungswinkel abdeckenden Erfassungsbereich überlappen oder schneiden, in welchem die ausgesandte Strahlung von Gegenständen reflektiert wird, mit einer im Ausbreitungsweg der ausgesandten Strahlung und/oder der reflektierten Strahlung gelegenen Abbildungsanordnung, die zu jedem Zeitpunkt den gesamten Erfassungsbereich sendeseitig und/oder empfangsseitig abdeckt, und mit Ortsauflösungsmitteln zur Beeinflussung der Ausbreitungsrichtung der Strahlung und/oder zum Betreiben der Empfangseinrichtung derart, insbesondere zeitlich variierend, dass die Lage, insbesondere der Abstand, des Erfassungsbereiches relativ zur Abbildungsanordnung und/oder die durch den Grad, in welchem sich der Sendebereich und der Empfangsbereich überlappen oder schneiden, bestimmte Größe des Erfassungsbereiches veränderbar sind/ ist.

## Beschreibung

Die Erfindung betrifft eine Vorrichtung zur ortsaufgelösten Erfassung von in einem Überwachungsbereich befindlichen Gegenständen mit einer Sendeeinrichtung zur Aussendung von elektromagnetischer Strahlung in einem Sendebereich und mit einer Empfangseinrichtung zum Empfang von aus einem Empfangsbereich reflektierter Strahlung, wobei sich der Sendebereich und der Empfangsbereich in einem innerhalb des Überwachungsbereiches gelegenen und einen Erfassungswinkel abdeckenden Erfassungsbereich überlappen oder schneiden, in welchem die ausgesandte Strahlung von Gegenständen reflektiert wird.

Derartige Erfassungsvorrichtungen sind grundsätzlich bekannt, z.B. in Form von Laserscannern, die als scannende Laserentfernungsmesser ausgebildet sind und den Erfassungsbereich mit einem Laserstrahl zeitlich gepulst oder kontinuierlich abtasten. Die Entfernungsmessung erfolgt dabei z.B. nach einem Laufzeitmessprinzip ("time of flight", TOF) oder einem Phasenmessprinzip.

Derartige Erfassungsvorrichtungen werden z.B. an Fahrzeugen montiert, um die Fahrzeugumgebung abzutasten und hierdurch in Sichtweite der Vorrichtung befindliche Gegenstände, wie beispielsweise andere Verkehrsteilnehmer, zu erkennen. Hierdurch ist das Fahrzeug gewissermaßen in der Lage, sich ein ortsaufgelöstes und - aufgrund der Möglichkeit zur Messung von Entfernungen - außerdem tiefenaufgelöstes Bild von seiner Umgebung zu machen, wobei diese Umgebungserfassung in Echtzeit erfolgt. Vielfältige Anwendungen sind mit den auf diese Weise gewonnenen Umgebungsdaten möglich. Derartige Erfassungsvorrichtungen werden auch in industriellen Anwendungen eingesetzt.

Insbesondere für scannende TOF-Laserentfernungsmesser, die einen vergleichsweise großen Winkelbereich von bis zu 360° in wenigstens einer Sende- oder Erfassungsebene überwachen sollen, ist es bekannt, den im Prinzip eindimensionalen Abtastlaserstrahl, also die ausgesandte Strahlung, innerhalb dieser Ebene mit einer vorgegebenen, die Ortsauflösung mitbestimmenden Winkelauflösung auszulenken. Hierzu ist es bekannt, in den - auch einfach als Sensoren bezeichneten - Erfassungsvorrichtungen den - auch als Mess- oder Fahrstrahl bezeichneten - Abtaststrahl mittels eines motorisch bewegten rotierenden Prismas oder mittels eines z.B. um 45° zur optischen Achse gekippten rotierenden Spiegels auszulenken. In diesen Fällen verlaufen die Rotationsachse des Primas bzw. des Spiegels und die optische Achse des Sensors parallel zueinander. In einer alternativen Ausgestaltung kann die gesamte elektrooptische Einheit des Sensors zur Rotation gebracht werden. Hierbei werden sowohl die Sende- als auch die Empfangsapertur auf einer Kreisbahn bewegt, um dafür zu sorgen, dass der Abtaststrahl des Sensors den gewünschten Winkelbereich von bis zu 360° überstreicht.

Die vorstehend genannten Lösungen haben den Nachteil, dass vergleichsweise große Massen bewegt, insbesondere in Rotation versetzt, werden müssen. Die hierzu erforderliche elektrische Leistung trägt in einem nicht unerheblichen Umfang zur gesamten Leistungsaufnahme des Sensors bei. Von Nachteil ist ferner, dass die erforderliche Lagerung der rotierenden Bauteile die Lebensdauer des Sensors signifikant begrenzt.

Um diese Nachteile zu beseitigen, ist bereits vorgeschlagen worden, im Ausbreitungsweg der ausgesandten Strahlung und/oder der reflektierten Strahlung eine Abbildungsanordnung vorzusehen, die zu jedem Zeitpunkt den gesamten Erfassungsbereich sendeseitig und/oder empfangsseitig abdeckt, wobei außerdem Ortsauflösungsmittel vorgesehen sind, die dazu ausgebildet sind, die reflektierte Strahlung hinsichtlich des Reflexionsortes zu unterscheiden. Hierzu wird auf die am 20. März 2008 eingereichte, noch nicht veröffentlichte europäische Patentanmeldung der Anmelderin mit dem Aktenzeichen EP 08 005 342 (Anwaltsaktenzeichen: S 10677PEP) verwiesen. Obwohl damit vollauf zufrieden stellend arbeitende Lösungen zur Verfügung stehen, besteht weiterhin ein Bedarf, die Erfassung von Gegenständen zu verbessern. Insbesondere ist es mit den in der genannten Anmeldung beschriebenen Lösungen schwierig bis unmöglich, den Überwachungsbereich in verschiedenen Höhenlagen abzutasten, d.h. die bekannten Lösungen sind im Hinblick auf eine praktische Realisierbarkeit sozusagen nicht elevationsfähig. In der Praxis ist es aber wünschenswert, den Überwachungsbereich nicht nur in einer einzigen, insbesondere horizontalen Ebene in einem Winkelbereich von bis zu 360° abzutasten, sondern für viele Anwendungen ist es außerdem wünschenswert, die Abtastung außerdem in unterschiedlichen Höhenlagen vorzunehmen.

Ein weiteres Problem in Verbindung mit den bekannten Lösungen besteht in der Tatsache, dass generell die Empfindlichkeit einer derartigen Erfassungsvorrichtung, insbesondere eines Laserscanners, eine Funktion der Gegenstandsentfernung sowie des Versatzes zwischen den Sende- und Empfangsoptiken ist. In vielen Fällen bedingt das Design der Erfassungsvorrichtung, dass die Sende- und Empfangsoptiken nicht derart nahe beieinander angeordnet werden können, wie es für eine bestimmten Anforderungen gerecht werdende Empfindlichkeit der Erfassungsvorrichtung wünschenswert wäre. Hieraus resultiert insbesondere eine unzureichende Empfindlichkeit oder sogar "Blindheit" im so genannten Nahbereich der Erfassungsvorrichtung, da ein ausreichender Überlapp des Sendebereiches und des Empfangsbereiches sich erst in größeren Entfernungen von der Erfassungsvorrichtung einstellt.

Aufgabe der Erfindung ist es, eine Erfassungsvorrichtung der eingangs genannten Art derart weiterzubilden, dass die vorstehend erwähnten Nachteile vermieden werden, wobei insbesondere bei möglichst einfachem, störunanfälligem und eine möglichst lange Lebensdauer sicherstellendem Aufbau eine zuverlässige Erfassung von in einem Überwachungsbereich befindlichen Gegenständen nicht nur über einen möglichst großen Winkelbereich von insbesondere bis zu 360°, sondern außerdem eine Gegenstandserfassung in unterschiedlichen Höhenniveaus erzielbar sein und außerdem die Möglichkeit gegeben sein soll, Unzulänglichkeiten hinsichtlich der Empfindlichkeit der Erfassungsvorrichtung möglichst weitgehend zu beseitigen.

Die Lösung dieser Aufgabe erfolgt durch die Merkmale des Anspruchs 1.

Insbesondere ist erfindungsgemäß vorgesehen, dass die Vorrichtung eine im Ausbreitungsweg der ausgesandten Strahlung und/oder der reflektierten Strahlung gelegene Abbildungsanordnung, die zu jedem Zeitpunkt den gesamten Erfassungsbereich sendeseitig und/oder empfangsseitig abdeckt, sowie Ortsauflösungsmittel umfasst, die dazu ausgebildet sind, die Ausbreitungsrichtung der Strahlung zu beeinflussen und/oder die Empfangseinrichtung zu betreiben, insbesondere zeitlich variierend, und zwar derart, dass die Lage des Erfassungsbereiches relativ zur Abbildungsanordnung, insbesondere der Abstand des Erfassungsbereiches von der Abbildungsanordnung, und/oder die durch den Grad, in welchem sich der Sendebereich und der Empfangsbereich überlappen oder schneiden, bestimmte Größe des Erfassungsbereiches veränderbar sind/ist.

Die Erfindung beruht auf dem Gedanken, die Lage und/oder Größe des Erfassungsbereiches relativ zur Abbildungsanordnung und damit zur Erfassungsvorrichtung bzw. zu einem Gegenstand, beispielsweise einem Fahrzeug, an welchem die Erfassungsvorrichtung angebracht ist, und die aus dieser Lage und/oder Größe des Erfassungsbereiches resultierenden Gegebenheiten nicht als eine unvermeidbare Eigenschaft der Erfassungsvorrichtung hinzunehmen, sondern Mittel vorzusehen, mit denen die Lage und/oder die Größe des Erfassungsbereiches verändert werden können/kann, und zwar Mittel, welche die Ausbreitungsrichtung der Strahlung entsprechend beeinflussen und/oder die Empfangseinrichtung entsprechend betreiben.

Erfindungsgemäß sind somit zwei generelle Möglichkeiten zur Erzielung der Ortsauflösung vorgesehen, wobei diese beiden Möglichkeiten alternativ oder gemeinsam zur Anwendung kommen können.

Gemäß der einen Möglichkeit wird die Ausbreitungsrichtung der Strahlung beeinflusst. Empfangsseitig beispielsweise kann hierdurch erreicht werden, dass die Empfangseinrichtung gewissermaßen zum "richtigen" Zeitpunkt Strahlung asu der "richtigen" Richtung empfängt. Hierdurch braucht die Empfangseinrichtung selbst nicht zu einer Ortsauflösung in der Lage sein, wobei dies aber auch nicht ausgeschlossen ist.

Gemäß der anderen Möglichkeit ist eine Beeinflussung der Ausbreitungsrichtung der Strahlung nicht erforderlich. Vielmehr wird hier die Ortsauflösung durch einen entsprechenden Betrieb der Empfangseinrichtung erreicht. Insbesondere ist dabei eine Empfangseinrichtung vorgesehen, die selbst zu einer Ortsauflösung in der Lage ist. Eingesetzt wird beispielsweise eine 3D-Kamera, die eine Mehrzahl von - im Folgenden als Pixel bezeichneten - Einzel-Empfängern oder Einzel-Empfangseinrichtungen aufweist. Dabei "blickt" jedes Pixel in eine andere Richtung, so dass die Gesamtheit aller Empfangsbereiche der Pixel den Empfangsbereich der Empfangseinrichtung bildet. Eine solche 3D-Kamera "blickt" also zu jedem Zeitpunkt gleichzeitig in alle interessierenden Richtungen, so dass - wie gesagt - auf die Ausbreitungsrichtung der Strahlung kein Einfluss genommen zu werden braucht, um die gewünschte Ortsauflösung zu erzielen. Um sicherzustellen, dass die aus der jeweils interessierenden Richtung stammende Strahlung zur Auswertung gelangt, wird die Empfangseinrichtung, beispielsweise die 3D-Kamera, entsprechend betrieben, indem jeweils die "richtigen" Pixel ausgewertet bzw. ausgelesen werden. Unter einer 3D-Kamera wird hier folglich eine Empfangseinrichtung verstanden, die bereits selbst ein ortsaufgelöstes Bild des Erfassungsbereiches oder zumindest eines Teils davon liefert, so dass die 3D-Kamera selbst nicht bewegt zu werden braucht und auch keine weiteren Einrichtungen, wie beispielsweise Spiegel, erforderlich sind, um die aus dem Empfangsbereich reflektierte Strahlung in einer wie auch immer gearteten Weise auf die 3D-Kamera zu lenken. Gleichwohl schließt der Einsatz einer derartigen 3D-Kamera weder eine wie auch immer geartete Bewegung der 3D-Kamera noch das Vorsehen von Mitteln zu Beeinflussung der Ausbreitungsrichtung der Strahlung aus. Zusätzlich zeichnet sich eine 3D-Kamera, wie sie im Rahmen der Erfindung verstanden wird, dadurch aus, dass sie nicht nur ein ortsaufgelöstes, sondern außerdem ein tiefenaufgelöstes Bild liefert. Mit anderen Worten liefert jedes Pixel oder jede Gruppe von in geeigneter Weise zusammengefassten Pixeln zusätzlich zu einem Helligkeits- und/oder Farbwert einen Entfernungswert. Derartige 3D-Kameras sind grundsätzlich bekannt, beispielsweise in Form so genannter PMD-Sensoren (PMD = Photonic Mixer Device oder Photomischdetektor). Derartige PMD-Sensoren arbeiten beispielsweise nach dem Phasendifferenzverfahren, d.h. die Entfernung wird durch die Phasenverschiebung zwischen ausgesandter und empfangener Strahlung ermittelt. Als Strahlung wird hier insbesondere solche mit einer Wellenlänge im Infrarotbereich eingesetzt. Sendeseitig kann in Verbindung mit einem derartigen als Empfänger eingesetzten PMD-Sensor oder einer anderen geeigneten 3D-Kamera eine Strahlungsquelle eingesetzt werden, die gleichzeitig den gesamten Erfassungsbereich "beleuchtet", wobei diese Beleuchtung kontinuierlich oder gepulst erfolgen kann. In dieser Ausgestaltung der Erfindung wird folglich weder empfangsseitig noch sendeseitig ein Mittel zur Beeinflussung der Ausbreitungsrichtung der Strahlung benötigt. Eine solche erfindungsgemäße Vorrichtung umfasst folglich in vorteilhafter Weise keinerlei Komponenten, die für die gewünschte ortsaufgelöste Erfassung von im Überwachungsbereich befindlichen Gegenständen in einer wie auch immer gearteten Weise bewegt zu werden brauchen. Gleichwohl kann aus verschiedenen Gründen, beispielsweise zur Erhöhung der Reichweite, zur Erhöhung der Augensicherheit und/oder zur Erhöhung der Lebensdauer der Sendeeinrichtung eine zeitlich und/oder räumlich gezielte Aussendung der Strahlung bei entsprechend angepasstem, insbesondere zeitlich und/oder räumlich synchronisiertem, Betrieb der 3D-Kamera auf der Empfangsseite erfolgen.

Durch die Erfindung kann z.B. die Höhenlage des Erfassungsbereiches variiert werden, was eine quasi dreidimensionale Abtastung des Überwachungsbereiches ermöglicht. Außerdem kann durch die Veränderung der Lage und/oder der Größe des Erfassungsbereiches auch Einfluss auf die Empfindlichkeitseigenschaften der Erfassungsvorrichtung genommen werden.

Zu der erfindungsgemäßen Erfassungsvorrichtung ist generell noch folgendes zu bemerken:
Bei dem Erfassungsbereich handelt es sich um denjenigen Bereich des Überwachungsbereiches, in den die Vorrichtung gewissermaßen sowohl mit der Sendeeinrichtung als auch mit der Empfangseinrichtung "blickt". Mit anderen Worten ist der Erfassungsbereich derjenige Bereich in der Umgebung der Vorrichtung, in welchem Gegenstände von der Vorrichtung detektiert, d.h. "gesehen", werden können. Prinzipiell ist es möglich, dass der Sendebereich und der Empfangsbereich mehr oder weniger zusammenfallen. Dies ist beispielsweise bei einer so genannten koaxialen Anordnung eines Senders der Sendeeinrichtung und eines Empfängers der Empfangseinrichtung bzw. der entsprechenden Optiken der Fall. Bei einer so genannten biaxialen Anordnung dagegen "blicken" der Sender und der Empfänger aus unterschiedlichen Richtungen auf den Erfassungsbereich. In einer solchen Anordnung kann - bei festen "Blickrichtungen" des Senders und des Empfängers - insbesondere eine Überlappung von Sendebereich und Empfangsbereich in einem Nahbereich der Erfassungsvorrichtung unterbleiben.

Die Ortsauflösung der erfindungsgemäßen Vorrichtung ist auch durch die Größe des Querschnitts bestimmt, die ein in den Erfassungsbereich ausgesandter Strahl auf einem Gegenstand besitzt, an welchem der Strahl reflektiert wird. Insofern kann die Ortsauflösung von der Entfernung zwischen Erfassungsvorrichtung und Gegenstand abhängig sein, wenn der ausgesandte Strahl eine Divergenz aufweist, d.h. sich aufweitet. Eine Rolle spielen hier auch die Abbildungseigenschaften der verwendeten optischen Einrichtungen der Sendeeinrichtung, insbesondere der erfindungsgemäßen Abbildungsanordnung, sofern diese sendeseitig wirksam ist.

Indem die Abbildungsanordnung den gesamten Erfassungsbereich abdeckt, "sieht" die Abbildungsanordnung zu jedem Zeitpunkt eine Mehrzahl von (möglichen) Reflexionsorten, wobei "möglich" hier so zu verstehen ist, dass von einem Reflexionsort tatsächlich nur dann gesprochen werden kann, wenn sich im Erfassungsbereich ein Gegenstand befindet, an dem eine Reflexion stattfinden kann. Mit anderen Worten ist die Abbildungsanordnung dazu in der Lage, gleichzeitig eine Mehrzahl von Reflexionsorten auf einem im Erfassungsbereich befindlichen Gegenstand zu erzeugen (sendeseitige Abdeckung) und/oder eine Mehrzahl von Reflexionsorten zu "sehen" und auf der Empfangseinrichtung abzubilden (empfangsseitige Abdeckung).

Gewissermaßen als "Ausgleich" für eine derartige gleichzeitige Abdeckung des gesamten Erfassungsbereiches sind mit dem Ziel einer ortsaufgelösten Erfassung der im Überwachungsbereich befindlichen Gegenstände Mittel, nämlich die Ortsauflösungsmittel, vorgesehen, die eine Ortsauflösung ermöglichen bzw. zur Unterscheidung der reflektierten Strahlung hinsichtlich des Reflexionsortes ausgebildet sind.

Die Erfindung hat den Vorteil, dass die Abbildungsanordnung nicht bewegt zu werden braucht, da sie dazu in der Lage ist, zu jedem Zeitpunkt den gesamten Erfassungsbereich abzudecken. Die Ortsauflösungsmittel können in vielfältiger Weise realisiert werden. Insbesondere ermöglicht es die Erfindung, für die gewünschte Ortsauflösung auf eine Bewegung von Bauteilen ganz zu verzichten oder die für die gewünschte Ortsauflösung zu bewegenden Massen auf ein Minimum zu reduzieren.

Der besondere Vorteil der Erfindung besteht darin, dass die Ortsauflösungsmittel nicht nur die Ortsauflösung ermöglichen, sondern außerdem dazu dienen, die Lage und/oder die Größe des Erfassungsbereiches zu verändern.

Der von der Abbildungsanordnung abgedeckte, d.h. "gesehene", Erfassungswinkel kann grundsätzlich beliebig groß gewählt werden. So ist es möglich, dass die Abbildungsanordnung einen Erfassungswinkel von wenigstens 90°, vorzugsweise von wenigstens 180° und insbesondere bevorzugt von 360° abdeckt. In letzterem Fall liegt ein Sensor mit "Rundumsicht" vor.

Vorzugsweise ist die Erfassungsvorrichtung als Entfernungsmesser ausgebildet. Insbesondere ist für jeden (möglichen) Reflexionsort ein Entfernungswert bestimmbar. Die Vorrichtung kann zur Entfernungsmessung nach dem Laufzeitmessprinzip und/oder nach dem Phasenmessprinzip ausgebildet sein. Insbesondere ist die Vorrichtung als ein Laserscanner ausgebildet, der den Erfassungsbereich zeitlich gepulst oder kontinuierlich mit wenigstens einem ausgesandten Laserstrahl abtastet.

Gemäß der Erfindung kann mittels der Ortsauflösungsmittel auch die durch den Grad, in welchem sich der Sendebereich und der Empfangsbereich überlappen oder schneiden, bestimmte Größe des Erfassungsbereiches verändert werden. Die Größe des Erfassungsbereiches bestimmt die Intensität der vom Empfänger detektierbaren reflektierten Strahlung. Die Änderung der Größe des Erfassungsbereiches eröffnet also die Möglichkeit, auf die Empfindlichkeit der Erfassungsvorrichtung Einfluss zu nehmen. Wie diese Möglichkeit für in der Praxis relevante Anwendungen genutzt werden kann, wird nachstehend näher erläutert.

Bevorzugt sind die Ortsauflösungsmittel im Ausbreitungsweg der Strahlung zwischen einem Sender der Sendeeinrichtung und der Abbildungsanordnung und/oder im Ausbreitungsweg der Strahlung zwischen der Abbildungsanordnung und einem Empfänger der Empfangseinrichtung angeordnet, und/oder umfassen die Ortsauflösungsmittel solche Mittel, die einen Empfänger der Empfangseinrichtung ortsaufgelöst betreiben, wobei der Empfänger bevorzugt als 3D-Kamera, insbesondere bevorzugt als PMD-Sensor, ausgebildet ist.

Des Weiteren kann vorgesehen sein, dass die Ortsauflösungsmittel wenigstens ein zur Ausführung von Ablenkbewegungen elektrisch ansteuerbares bewegliches optisches Element, insbesondere einen Spiegel, ein Prisma oder einen Keil, und/oder zumindest eine zur Veränderung des strahlungsbrechenden Verhaltens elektrisch ansteuerbare diffraktive Optik und/oder Mittel umfassen, die einen Empfänger der Empfangseinrichtung ortsaufgelöst betreiben, wobei der Empfänger bevorzugt als 3D-Kamera, insbesondere bevorzugt als PMD-Sensor, ausgebildet ist. Derartige Ortsauflösungsmittel sind grundsätzlich bekannt. In einem bevorzugten Ausführungsbeispiel wird sendeseitig und/oder empfangsseitig jeweils wenigstens ein so genannter mikromechanischer Spiegel (MEMS) eingesetzt, wobei dies aber nicht zwingend ist. In einem anderen bevorzugten Ausführungsbeispiel ist empfangsseitig eine 3D-Kamera, insbesondere ein PMD-Sensor, vorgesehen.

Auf die Möglichkeit einer Verwendung einer 3D-Kamera bzw. eines PMD-Sensors wurde vorstehend bereits eingegangen. Mit einer derartigen 3D-Kamera kann also empfangsseitig ohne zu bewegende Teile eine Ortsauflösung dadurch erzielt werden, dass die Pixel der 3D-Kamera gezielt in einer bestimmten Art und Weise ausgelesen werden. Aufgrund der Anordnung und/oder Ausrichtung der 3D-Kamera in Bezug auf den Erfassungsbereich ist bekannt, in welche Richtung jedes Pixel "blickt", d.h. welcher Teilbereich des Erfassungsbereiches von welchem Pixel abgedeckt wird. Durch eine entsprechende Auswerte- bzw. Ausleseprozedur der Pixel der 3D-Kamera kann folglich ein erfasster Reflexionsort im Erfassungsbereich eindeutig zugeordnet werden. Der Betrieb der 3D-Kamera kann mit dem Betrieb der Sendeinrichtung insofern synchronisiert werden, als bei zeitlich variierender Ausbreitungsrichtung der ausgesandten Strahlung in den Erfassungsbereich zu jedem Zeitpunkt dadurch empfangsseitig in die richtige Richtung "geblickt" wird, indem das richtige Pixel bzw. die richtige Pixel-Gruppe, das bzw. die in den entsprechenden Teilbereich des Erfassungsbereiches "blickt", zum richtigen Zeitpunkt ausgewertet bzw. ausgelesen wird.

Die Erfindung ermöglicht es folglich, die für die Umgebungserfassung zu bewegenden Massen zu minimieren. Ein Sender, beispielsweise eine Laserquelle, der Sendeeinrichtung, ein Empfänger, beispielsweise ein oder mehrere Fotodioden oder eine 3D-Kamera, der Empfangseinrichtung sowie die Abbildungsanordnung, die beispielsweise zwei Panoramalinsen oder omnidirektionale Linsen umfasst, von denen die eine der Sendeeinrichtung und die andere der Empfangseinrichtung zugeordnet ist, können in Bezug auf eine Basis der Erfassungsvorrichtung, d.h. bezüglich eines fest mit der Erfassungsvorrichtung verbundenen Koordinatensystems, unbeweglich angeordnet sein.

Die Abbildungsanordnung ist bevorzugt zur Umlenkung der ausgesandten Strahlung und/oder der reflektierten Strahlung ausgebildet.

In einem Ausführungsbeispiel umfasst die Abbildungsanordnung wenigstens eine, insbesondere zumindest teilringförmige, Fläche, wobei mittels der Ortsauflösungsmittel sendeseitig der Winkel, unter dem die von der Sendeeinrichtung ausgesandte Strahlung auf die Fläche auftrifft, und/oder empfangsseitig der Winkel, mit dem die von der Fläche kommende Strahlung auf die Ortsauflösungsmittel auftrifft, veränderbar sind / ist.

Die Lage- und/oder Größenveränderung des Erfassungsbereiches erfolgt somit auf denkbar einfache Weise durch die mittels der Ortsauflösungsmittel mögliche Änderung der genannten Winkel. Mit der diesbezüglich vorgesehenen Fläche der Abbildungsanordnung kann somit eine, insbesondere geometrische, Eigenschaft der Abbildungsanordnung ausgenutzt werden, um auf einfache Weise und insbesondere ohne eine Bewegung der Abbildungsanordnung selbst die gewünschte Änderung der Lage und/oder Größe des Erfassungsbereiches zu erzielen.

Bei der erwähnten Fläche kann es sich beispielsweise um eine geschlossene ebene Ringfläche handeln, die geneigt zu einer optischen Achse der Abbildungsanordnung verläuft und an welcher sendeseitig die von der Sendeeinrichtung ausgesandte Strahlung und/oder empfangsseitig die im Überwachungsbereich reflektierte Strahlung reflektiert wird. Insbesondere kann die Abbildungsanordnung eine sendeseitige derartige Fläche und eine empfangsseitige derartige Fläche aufweisen. Bei entsprechender relativer Anordnung führt eine mittels der Ortsauflösungsmittel realisierbare Veränderung des Einfallswinkels auf diese Fläche (sendeseitig) bzw. auf die Ortsauflösungsmittel (empfangsseitig) zu einer Änderung der Ausrichtung des Sendebereiches bzw. des Empfangsbereiches und somit zu einer Lage- und/oder Größenveränderung des Erfassungsbereiches. Sendeseitig wird folglich unter Ausnutzung der Fläche der Abbildungsanordnung die Richtung, in welche die Strahlung in den Überwachungsbereich ausgesandt wird, gezielt vorgegeben (= Ausrichtung des Sendebereiches), wobei empfangsseitig dafür gesorgt wird, dass die im Überwachungsbereich reflektierte und über die besagte Fläche der Abbildungsanordnung auf die Ortsauflösungsmittel gelangende Strahlung zu der Empfangseinrichtung gelangt, die Erfassungsvorrichtung sozusagen in die richtige Richtung "blickt" (= Ausrichtung des Empfangsbereiches).

Bleibt der Winkel, unter welchem die Ortsauflösungsmittel die von der Sendeeinrichtung ausgesandte Strahlung auf die Fläche der Abbildungsanordnung richten, konstant, dann erfolgt die Abtastung des Überwachungsbereiches lediglich in einer einzigen Abtastebene, und zwar im Falle einer geschlossenen Ringfläche über einen Erfassungswinkel von 360°. Die Ortsauflösungsmittel sind dann lediglich dahingehend wirksam, mit der von der Sendeeinrichtung ausgesandten Strahlung auf der Ringfläche der Abbildungsanordnung eine Kreisbahn zu beschreiben. Durch die zusätzlich erfolgende Änderung des Winkels ändert sich die Richtung der von der Ringfläche ausgehenden Strahlung und damit die Ausrichtung des Sendebereiches und somit schlussendlich die Lage und/oder Größe des Erfassungsbereiches. Beispielsweise könne auf diese Weise sendeseitig mittels der Ortsauflösungsmittel auf der Fläche der Abbildungsanordnung nacheinander eine Mehrzahl von Kreisbahnen mit unterschiedlichem Radius durchfahren werden. Jede Kreisbahn sorgt für eine Abtastung des Überwachungsbereiches in einer bestimmten Höhenlage, womit eine Elevationsfähigkeit des Sensors erreicht wird. Unterschiedliche Radien der Kreisbahnen entsprechen unterschiedlichen Höhenlagen der Abtastung im Überwachungsbereich. Alternativ kann auf der Ringfläche eine von einem Kreis abweichende, beispielsweise eine spiral- oder helixförmige, Bahn beschrieben werden. Somit sind der Art und Weise, wie die Abtastung des Überwachungsbereiches auch bezüglich der Höhenlage erfolgt, durch die Erfindung praktisch keine Grenzen gesetzt.

Es ist auch möglich, solche Ortsauflösungsmittel zu verwenden, die auf die Fläche der Abbildungsanordnung ein beispielsweise gitterförmiges Muster projizieren. Da alle entscheidenden Parameter eines solchen Systems bekannt sind, kann durch eine empfangsseitig erfolgende selektive Auswertung der Empfangseinrichtung eine grundsätzlich beliebig verlaufende Abtastung, z.B. in unterschiedlichen Höhenlagen, erfolgen. Eine Abtastung in unterschiedlichen Höhenlagen beispielsweise erfolgt hierbei also durch eine entsprechende Auswertung der empfangenen Strahlung bzw. einen entsprechenden Betrieb, insbesondere eine entsprechende Ansteuerung, Auslese und/oder Auswertung etc., des insbesondere als 3D-Kamera ausgebildeten Empfängers. Generell kann die Elevationsfähigkeit der erfindungsgemäßen Vorrichtung also dadurch erzielt werden, dass die Beaufschlagung der an der Abbildungsanordnung vorgesehenen Fläche mittels der von der Sendeeinrichtung ausgesandten Strahlung nicht nur auf einem Radius oder nicht nur mit punktförmiger Strahlung erfolgt.

Alternativ oder zusätzlich zu einer Ausrichtung des Sendebereiches und/oder des Empfangsbereiches mittels der Ortsauflösungsmittel kann gemäß einem grundsätzlich unabhängigen, unabhängig beanspruchten bzw. beanspruchbaren Aspekt der Erfindung auch vorgesehen sein, die an der Abbildungsanordnung vorgesehene sendeseitige und/oder empfangsseitige Fläche mit einem bestimmten Verlauf bzw. einer bestimmten Form zu versehen, so dass auch bei konstantem Winkel der auftreffenden Strahlung zur optischen Achse während eines Scans unterschiedliche Ausrichtungen des Sendebereiches erzielt werden. Die Fläche kann z.B. eine Ringfläche sein, deren Neigung zur optischen Achse in Umfangsrichtung variiert. Die empfangsseitige Fläche kann dabei entsprechend verlaufen, so dass eine gewünschte Synchronisierung zwischen Sendeseite und Empfangsseite gegeben ist.

Vorzugsweise umfasst die Abbildungsanordnung wenigstens ein optisch wirksames Element, insbesondere eine Linse, bevorzugt eine Panoramalinse und/oder eine omidirektionale Linse, oder eine Strahlungsreflexionsfläche, bevorzugt einen zumindest teilkegelförmigen Spiegel. Der Begriff "Linse" soll im Rahmen der Erfindung breit und insbesondere in einer von einem eventuell gegebenen konventionellen Verständnis abweichenden Weise derart verstanden werden, dass die Linse auch zur Strahlungsreflexion in der Lage ist.

Derartige optisch wirksame Elemente, insbesondere die erwähnten Panoramalinsen bzw. omnidirektionalen Linsen, sind grundsätzlich bekannt. Der Einsatz derartiger Linsen erfolgt z.B. im Bereich von Videoanwendungen. Die Erfindung nutzt in vorteilhafter Weise die Eigenschaft derartiger optisch wirksamer Elemente dazu aus, einen großen Erfassungsbereich, der insbesondere einen Erfassungswinkel von bis zu 360° umfasst, auf einmal abdecken zu können, ohne die Elemente hierfür bewegen, insbesondere drehen, zu müssen. Die Erfindung ermöglicht somit den Einsatz derartiger optisch wirksamer Elemente in einer Vorrichtung zur ortsaufgelösten Umgebungserfassung, insbesondere von Panoramalinsen bzw. omnidirektionalen Linsen, in Verbindung mit einem Laserscanner. Da erfindungsgemäß keine Notwendigkeit mehr besteht, eine vergleichsweise große Masse aufweisende Komponenten zu bewegen, insbesondere in Rotation zu versetzen, wird die Lebensdauer der erfindungsgemäßen Erfassungsvorrichtungen signifikant erhöht. Des Weiteren sorgt die Erfindung für eine relevante Reduzierung der Leistungsaufnahme der Erfassungsvorrichtung.

In einem weiteren möglichen Ausführungsbeispiel der Erfindung umfasst die Abbildungsanordnung eine gemeinsame Abbildungseinrichtung, die sowohl sendeseitig als auch empfangsseitig wirksam ist. Dies ist jedoch nicht zwingend. Es ist auch möglich, dass die Abbildungsanordnung sowohl sendeseitig als auch empfangsseitig jeweils eine separate Abbildungseinrichtung umfasst. Diese beiden Abbildungseinrichtungen können insbesondere baugleich, bevorzugt identisch, ausgeführt sein. Hierdurch wird ein gemäß einer weiteren Ausführungsform vorgesehener, hinsichtlich zumindest der prinzipiellen Anordnung und Wirkungsweise der optischen Bauteile symmetrischer Grundaufbau der erfindungsgemäßen Erfassungsvorrichtung ermöglicht, wobei die Symmetrie bezüglich einer die Sendeseite von der Empfangsseite trennenden Ebene gegeben ist. Hierbei ist "symmetrisch" nicht zu eng auszulegen. Vielmehr sollen Unterschiede zwischen der Empfangsseite und der Sendeseite, die in Bezug auf die spezifischen Funktionen der Sendeeinrichtung einerseits und der Empfangseinrichtung andererseits erforderlich oder vorteilhaft sind (z.B. Unterschiede in der Größe der wirksamen Empfangsfläche einerseits und der wirksamen Sendefläche andererseits), an dem symmetrischen Grundaufbau an sich nichts ändern, von dem Begriff "Symmetrie" mit umfasst sein. So ist man naturgemäß bestrebt, in Abhängigkeit von der Größe des Empfängers die Empfangsoptik derart und insbesondere möglichst großflächig auszulegen, dass die empfangene Leistung möglichst hoch ist. Gleichzeitig kann sendeseitig dagegen eine deutlich kleinere Sendeoptik ausreichend sein.

Die Erfindung betrifft auch ein Verfahren zur ortsaufgelösten Erfassung von in einem Überwachungsbereich befindlichen Gegenständen mittels einer Vorrichtung, insbesondere einer Vorrichtung nach einem der vorhergehenden Ansprüche, die eine Sendeeinrichtung zur Aussendung von elektromagnetischer Strahlung in einem Sendebereich und eine Empfangseinrichtung zum Empfang von aus einem Empfangsbereich reflektierter Strahlung umfasst, wobei sich der Sendebereich und der Empfangsbereich in einem innerhalb des Überwachungsbereiches gelegenen und einen Erfassungswinkel abdeckenden Erfassungsbereich überlappen oder schneiden, in welchem die ausgesandte Strahlung von Gegenständen reflektiert wird, und wobei die Vorrichtung eine im Ausbreitungsweg der ausgesandten Strahlung und/oder der reflektierten Strahlung gelegene Abbildungsanordnung umfasst, die zu jedem Zeitpunkt den gesamten Erfassungsbereich sendeseitig und/oder empfangsseitig abdeckt, wobei bei dem Verfahren die Ausbreitungsrichtung der Strahlung derart beeinflusst und/oder die Empfangseinrichtung derart betrieben wird, dass sich die Lage, insbesondere der Abstand, des Erfassungsbereiches relativ zur Abbildungsanordnung und/oder die durch den Grad, in welchem sich der Sendebereich und/oder der Empfangsbereich überlappen oder schneiden, bestimmte Größe des Erfassungsbereiches verändern/verändert.

Wie vorstehend bereits erwähnt, können in Verbindung mit einer Abbildungsanordnung, die wenigstens eine, insbesondere zumindest teilringförmige, Fläche umfasst, sendeseitig mittels der Ortsauflösungsmittel auf der Fläche nacheinander eine Mehrzahl von zumindest teilkreisförmigen Bahnen mit unterschiedlichem Radius und/oder eine von einem Kreis abweichende, insbesondere spiral- oder helixförmige, Bahn beschrieben werden.

Hierbei ist insbesondere vorgesehen, dass bezogen auf die Sendeseite einerseits und die Empfangsseite andererseits die Ortsauflösungsmittel derart synchron bzw. aufeinander abgestimmt betrieben werden, dass - bildlich gesprochen - die Empfangseinrichtung stets dorthin "blickt", wo die Sendeeinrichtung "hinleuchtet".

Durch die gemäß einem Aspekt der Erfindung erzielbare Änderung der Größe des Erfassungsbereiches wird die Möglichkeit geschaffen, gezielt auf die Empfindlichkeit der Erfassungsvorrichtung und insbesondere auf den Verlauf der Empfindlichkeit in Abhängigkeit von der Entfernung von der Erfassungsvorrichtung Einfluss zu nehmen. Die Intensität der von der Empfangseinrichtung empfangenen Strahlung ist maximal, wenn sich der Sendebereich und der Empfangsbereich maximal überlappen. Durch Verändern des Überlappungsgrades kann somit die Empfindlichkeit gezielt beeinflusst werden. Der Überlappungsgrad kann durch entsprechendes Betreiben bzw. Ansteuern der Ortsauflösungsmittel grundsätzlich beliebig, auch in zeitlich variierender Weise, eingestellt werden.

In einem weiteren Ausführungsbeispiel der Erfindung ist vorgesehen, dass die Größe und/oder Lage des Erfassungsbereiches verändert wird, während sich die von der Sendeeinrichtung ausgesandte Strahlung ausbreitet. Ausreichend schnelle Ortsauflösungsmittel stehen z.B. in Form der bereits erwähnten diffraktiven Optiken zur Verfügung.

So ist es beispielsweise möglich, durch entsprechendes Betreiben der Ortsauflösungsmittel auf der Empfangsseite und/oder der Empfangseinrichtung die Ausrichtung des Empfangsbereiches - und damit auch die Lage des Erfassungsbereiches - derart zu ändern, dass stets auf die ausgesandte Strahlung - genauer gesagt auf die Front der sich weg von der Abbildungsanordnung ausbreitenden Strahlung bzw. auf einen ausgesandten Strahlungspuls - geblickt wird. Indem auf diese Weise die Empfangseinrichtung während der Ausbreitung der ausgesandten Strahlung stets dorthin "blickt", wo sich die Strahlungsfront bzw. der Strahlungspuls befindet, d.h. wo eine Reflexion der ausgesandten Strahlung mit einem im Überwachungsbereich befindlichen Gegenstand erfolgen kann, ist über die gesamte Messdistanz bzw. Reichweite der Erfassungsvorrichtung ein maximaler Überlapp zwischen Sendebereich und Empfangsbereich und damit eine maximale Größe des Erfassungsbereiches und somit schlussendlich eine maximale Empfindlichkeit der Erfassungsvorrichtung sichergestellt.

Wie vorstehend bereits erwähnt, erlaubt es die Erfindung auch, die Größe des Erfassungsbereiches mittels der Ortsauflösungsmittel zu verändern. Da ausreichend schnelle Ortsauflösungsmittel grundsätzlich zur Verfügung stehen, kann auch diese Größenveränderung während der Ausbreitung der ausgesandten Strahlung von der Abbildungsanordnung weg in den Überwachungsbereich erfolgen. Hierbei ist es nun nicht zwingend erforderlich, wie in dem voranstehenden Ausführungsbeispiel erläutert, dass stets ein maximaler Überlapp zwischen Sendebereich und Empfangsbereich und somit eine maximale Empfindlichkeit gegeben ist. Vielmehr kann der Überlappungsgrad und damit die Empfindlichkeit in Abhängigkeit von der Entfernung der Front der ausgesandten Strahlung bzw. des ausgesandten Strahlungspulses von der Erfassungsvorrichtung variiert werden. Dies wird auch als Steuerung der Empfangsdynamik des Sensors bezeichnet. Ein Hintergrund dieses Ausführungsbeispiels ist der Umstand, dass ein typischer Verlauf der Intensität der reflektierten Strahlung bei herkömmlichen Erfassungsvorrichtungen derart ausgestaltet ist, dass die Intensität bei kurzen Distanzen rasch ansteigt und anschließend langsam abfällt. Die erfindungsgemäß mögliche gezielte Steuerung der Empfangsdynamik kann dazu genutzt werden, einem solchen typischen Intensitätsverlauf mit dem Ziel, effektiv einen Verlauf mit über die Entfernung von der Erfassungsvorrichtung konstanter Intensität zu erzielen, dadurch zu begegnen, dass entsprechend dem Intensitätsverlauf die Größe des Erfassungsbereiches und damit die Empfindlichkeit variiert wird. Bildlich gesprochen kann also erreicht werden, dass während der Ausbreitung der ausgesandten Strahlung von der Abbildungsanordnung weg in den Überwachungsbereich die Empfangseinrichtung mit entsprechend dem - insbesondere erwarteten - Intensitätsverlauf "mehr oder weniger weit geöffnetem Auge blickt".

Gemäß einem weiteren Aspekt betrifft die Erfindung eine Verwendung einer Abbildungsanordnung, die zu jedem Zeitpunkt einen Erfassungsbereich sendeseitig und/oder empfangsseitig vollständig abdeckt, insbesondere einer Panoramalinse, einer omnidirektionalen Linse oder eines zumindest teilkegelförmigen Spiegels, in einer Vorrichtung zur ortsaufgelösten Erfassung von in einem Überwachungsbereich befindlichen Gegenständen, insbesondere einer Vorrichtung nach einem der vorhergehenden Ansprüche, wobei die Vorrichtung eine Sendeeinrichtung zur Aussendung von elektromagnetischer Strahlung in einem Sendebereich und eine Empfangseinrichtung zum Empfang von aus einem Empfangsbereich reflektierter Strahlung umfasst, wobei sich der Sendebereich und der Empfangsbereich in dem innerhalb des Überwachungsbereiches gelegenen und einen Erfassungswinkel abdeckenden Erfassungsbereich überlappen oder schneiden, in welchem die ausgesandte Strahlung von Gegenständen reflektiert wird, wobei die Abbildungsanordnung im Ausbreitungsweg der ausgesandten Strahlung und/oder der reflektierten Strahlung gelegen ist, und wobei die Vorrichtung Ortsauflösungsmittel zur Beeinflussung der Ausbreitungsrichtung der Strahlung und/oder zum Betreiben der Empfangseinrichtung derart, insbesondere zeitlich variierend, umfasst, dass die Lage, insbesondere der Abstand, des Erfassungsbereiches relativ zur Abbildungsanordnung und/oder die durch den Grad, in welchem sich der Sendebereich und der Empfangsbereich überlappen oder schneiden, bestimmte Größe des Erfassungsbereiches veränderbar sind/ist.

Generell ist die Erfindung in vielfältiger Weise einsetzbar, beispielsweise in Fahrzeuganwendungen und in industriellen Anwendungen.

Mögliche Ausführungsformen der Erfindung sind vorstehend bereits erläutert worden und auch in den abhängigen Ansprüchen, der Beschreibung sowie der Zeichnung angegeben.

Die Erfindung wird im Folgenden beispielhaft unter Bezugnahme auf die Zeichnung beschrieben. Es zeigen:
- Fig. 1: schematisch ein Ausführungsbeispiel einer erfindungsgemäßen Erfassungsvorrichtung,
- Fig. 2: eine Draufsicht auf eine Abbildungsanordnung der Erfassungsvorrichtung von Fig. 1 zur Erläuterung einer möglichen Betriebsweise, und
- Fig. 3: eine Ansicht entsprechend Fig. 2 zur Erläuterung einer weiteren möglichen Betriebsweise.

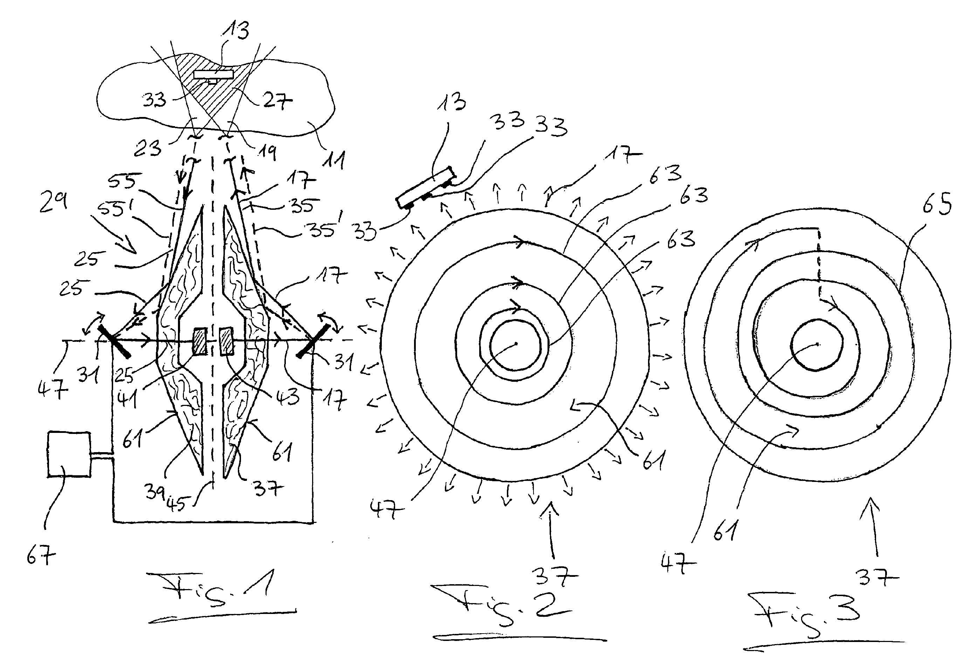

Bei der erfindungsgemäßen Erfassungsvorrichtung gemäß Fig. 1 sind zwei Panoramalinsen 37, 39 vorgesehen, die zusammen eine Abbildungsanordnung 29 im Sinne der Erfindung bilden. Die beiden Panoramalinsen 37, 39 sind baugleich ausgeführt und symmetrisch bezüglich einer Ebene 45 angeordnet. Außerdem sind die beiden Panoramalinsen 37, 39 rotationssymmetrisch bezüglich einer Achse 47 der Abbildungsanordnung ausgebildet.

Die eine Linse 37 ist einer einen Sender 43, beispielsweise eine Laserquelle, umfassenden Sendeeinrichtung zugeordnet, während die andere Linse 39 einer Empfangseinrichtung zugeordnet ist, die einen Empfänger 31 z.B. in Form einer Fotodiode umfasst.

In diesem Ausführungsbeispiel ist insbesondere eine solche Fotodiode vorgesehen, die selbst nicht zu einem ortsaufgelösten Betrieb in der Lage ist. Für die Ortsauflösung sorgen vielmehr die nachstehend beschriebenen Ortsauflösungsmittel, die hier als Mittel zur Beeinflussung der aus dem Empfangsbereich reflektierten Strahlung ausgebildet sind. Die Fotodiode ist also gewissermaßen davon abhängig, dass ihr jeweils die "richtige" Strahlung zugeführt wird. Wird anstelle einer solchen Fotodiode eine 3D-Kamera eingesetzt, wie sie vorstehend bereits erläutert wurde, dann ist eine derartige Beeinflussung der aus dem Empfangsbereich reflektierten Strahlung nicht erforderlich, denn die 3D-Kamera ist selbst zu einem ortsaufgelösten Betrieb in der Lage, indem die die 3D-Kamera bildenden Pixel entsprechend ausgelesen bzw. ausgewertet werden.

Ferner sind in diesem Ausführungsbeispiel als Ortsauflösungsmittel dienende Strahlungsbeeinflussungsmittel 31 vorgesehen, die sendeseitige Ortsauflösungsmittel und empfangsseitige Ortsauflösungsmittel umfassen. Auf diese Ortsauflösungsmittel 31 wird nachstehend näher eingegangen.

Für die Ortsauflösungsmittel 31 ist eine gemeinsame Steuerung 67 vorgesehen, die ebenfalls nachstehend näher beschrieben wird. Bei den Ortsauflösungsmitteln 31 handelt es sich z.B. jeweils um einen mikromechanischen Spiegel, einen so genannten MEMS. Derartige MEMS sind mittels der Steuerung 67 elektrisch ansteuerbar, um den Winkel, unter welchem einfallende Strahlung reflektiert wird, innerhalb bestimmter Grenzen beliebig verändern zu können. Im Folgenden werden die Ortsauflösungsmittel 31 auch einfach als sendeseitiger Spiegel bzw. empfangsseitiger Spiegel bezeichnet.

Eine Besonderheit der dargestellten Erfassungsvorrichtung besteht darin, dass der Sender 43 und der Empfänger 41 zwischen den beiden Linsen 37, 39 angeordnet sind, wodurch sich eine besonders kompakte Bauweise ergibt, die eine Miniaturisierung der Erfassungsvorrichtung ermöglicht.

Was die prinzipielle Funktionsweise der Erfassungsvorrichtung anbetrifft, so ist diese in Fig. 1 angedeutet: In einem Überwachungsbereich 11 befindet sich ein Gegenstand 13. Unter anderem aufgrund der Abbildungseigenschaften der Sendelinse 37 erfolgt eine Aufweitung der ausgesandten Strahlung 17. Die Aussendung der Strahlung 17 erfolgt in einem sich in radialer Richtung aufweitenden, einen Winkelbereich von 360° um die Sendelinse 37 herum abdeckenden Sendebereich 19. In alternativen Ausführungen kann auch eine kleinere Winkelabdeckung vorgesehen sein. Dabei liegt die Sendestrahlung 17 in einer ersten Sendeebene 35. Entsprechend besitzt die Empfangsseite, die die zur Sendelinse 37 baugleiche Empfangslinse 39 umfasst, einen Empfangsbereich 23. Die Anordnung und Ausgestaltung der beiden Linsen 37, 39 sind derart gewählt, dass bei einem bestimmten Einfallswinkel der ausgesandten Strahlung 17 und der reflektierten Strahlung 25 auf eine jeweilige ebene, geneigt zur Achse 47 orientierte Ringfläche 61 der betreffenden Linse 37, 39 ab einer bestimmten Messentfernung der Sendebereich 19 und der Empfangsbereich 23 einander überlappen bzw. sich schneiden. Hierdurch ergibt sich ein gestrichelt dargestellter Erfassungsbereich 27, in welchem die erfindungsgemäße Erfassungsvorrichtung Gegenstände 13 detektieren kann.

Diese Situation ist in Fig. 1 schematisch in einer Ebene dargestellt, welche die gemeinsame optische Achse 47 der beiden Linsen 37, 39 enthält. Bei dem Erfassungsbereich 27 handelt es sich folglich um einen bezüglich der Achse 47 rotationssymmetrischen Bereich der Umgebung der Erfassungsvorrichtung, der sich über 360° um die Abbildungsanordnung 29 bzw. deren Achse 47 herum erstreckt. Die ausgesandte Strahlung 17 wird von dem Gegenstand 13 an hier so genannten Reflexionsorten 33 reflektiert, von denen in Fig. 1 lediglich einer dargestellt ist.

Die Empfangslinse 39 ist in umgekehrter Strahlungsausbreitungsrichtung wirksam. Die aus dem Erfassungsbereich 27 in einer ersten Empfangsebene 55 reflektierte Strahlung 25 wird von der Empfangslinse 39 auf den Empfänger 41 abgebildet, wobei sich im Ausbreitungsweg der Strahlung noch der empfangsseitige Spiegel 31 befindet, auf dessen Funktion nachstehend näher eingegangen wird.

In optischer Hinsicht ist die Erfassungsvorrichtung somit hinsichtlich des generellen Grundaufbaus symmetrisch bezüglich der vorstehend bereits erwähnten, die Sendeseite von der Empfangsseite trennenden Ebene 45 ausgelegt, die senkrecht zur Achse 47 verläuft.

Um mittels der Sendelinse 37 die Strahlung 17 in unterschiedliche Richtungen auszusenden, ist im Ausbreitungsweg der Strahlung 17 zwischen dem Sender 43 und der Ringfläche 61 der Sendelinse 37 der als Ortsauflösungsmittel dienende sendeseitige Spiegel 31 angeordnet. Dieser Spiegel 31 kann mittels der Steuerung 67 zu bestimmten Bewegungen veranlasst werden, und zwar in zweierlei Hinsicht: Die eine Bewegbarkeit des Spiegels 31, die in Fig. 1 nicht näher angedeutet ist, dient zur Erzeugung der "Rundumsicht"-Eigenschaft der Erfassungsvorrichtung, d.h. zur nacheinander erfolgenden Beaufschlagung der Ringfläche 61 der Sendelinse 37 entlang einer Kreisbahn um die Achse 47, wobei der Winkel zwischen der vom Spiegel 31 reflektierten Strahlung und der Achse 47 und somit der Einfallswinkel der Strahlung 17 auf die Ringfläche 61 für den gesamten Erfassungswinkel von 360° konstant ist. Die Strahlung 17 wird folglich in einer einzigen Sendeebene 35 in den Überwachungsbereich 11 ausgesandt. Diese Situation ist in Fig. 1 durch durchgezogene Linien angedeutet. Der vom Spiegel 31 reflektierte Laserstrahl 17 bewegt sich - zeitlich gesehen - folglich auf einem Kegelmantel, so dass der aus der Sendelinse 37 austretende Laserstrahl 17 um die Achse 47 rotiert und folglich den gesamten Erfassungsbereich 27 überstreicht. Sendeseitig ist somit ein Laserscanner realisiert, wobei allerdings die für die Ablenkung in den Erfassungsbereich 27 sorgende Linse 37 stationär angeordnet ist. Es ist lediglich erforderlich, den Spiegel 31 zu bewegen. Durch dieses sendeseitige Scannen ist die gewünschte Ortsauflösung trotz der zu jedem Zeitpunkt gegebenen vollständigen Abdeckung des Erfassungsbereiches 27 durch die Sendelinse 37 gewährleistet.

Aufgrund der vorstehend erwähnten prinzipiellen symmetrischen Ausgestaltung der Erfassungsvorrichtung ist auch empfangsseitig im Ausbreitungsweg der reflektierten Strahlung 25 zwischen einer entsprechenden Ringfläche 61 der Empfangslinse 39 und dem Empfänger 41 ein mittels der Steuerung 67 zu Bewegungen ansteuerbarer Spiegel 31 angeordnet.

Der sendeseitige Spiegel 31 und der empfangsseitige Spiegel 31 sind durch die Steuerung 67 derart hinsichtlich ihrer Bewegungen miteinander synchronisiert betreibbar, dass jeweils ein in den Erfassungsbereich 27 ausgesandter Laserstrahl nach Reflexion an einem Gegenstand 13 mittels der Empfangslinse 39 auf dem Empfänger 41 abgebildet wird. Bildlich ausgedrückt "blickt" die Erfassungsvorrichtung empfangsseitig zu jedem Zeitpunkt dorthin, wo die Erfassungsvorrichtung sendeseitig "hinleuchtet".

Diese Selektivität stellt unter anderem in vorteilhafter Weise auch sicher, dass auf die Empfangslinse 39 auftreffende, aus anderen Quellen stammende Störstrahlung ausgeblendet wird, d.h. nicht auf den Empfänger 41 gelangt.

Zur Bestimmung der Entfernung des Gegenstandes 13 von der Erfassungsvorrichtung ist beispielsweise eine nicht dargestellte Einrichtung zur Laufzeitmessung vorgesehen. Hierbei wird die Zeit gemessen, welche die Laserstrahlung benötigt, um den Weg vom Sender 43 zum Gegenstand 13 und als reflektierte Strahlung 25 zurück zum Empfänger 41 zurückzulegen. Insofern können für die erfindungsgemäße Erfassungsvorrichtung grundsätzlich alle herkömmlichen Methoden zur Entfernungsmessung eingesetzt werden, wie sie z.B. in Bezug auf existierende Laserscanner bekannt sind. Auf die eigentliche Entfernungsmessung, die dem Fachmann somit bekannt ist, braucht daher nicht näher eingegangen zu werden.

Wie vorstehend bereits erwähnt, stellt zunächst die oben beschriebene Bewegbarkeit der Spiegel 31 sicher, dass in einer einzigen Sendeebene 35 und entsprechend einer einzigen Empfangsebene 55 eine Abtastung des Überwachungsbereiches 11 über einen Erfassungswinkel von - in diesem Ausführungsbeispiel - 360° um die Achse 47 herum erfolgt. Die Beaufschlagung der Ringflächen 61 der Linsen 37, 39 erfolgt dabei unter einem konstanten Winkel zur Achse 47. Ebenfalls konstant ist folglich die Lage des Erfassungsbereiches 27 in Bezug auf die von den beiden Linsen 37, 39 gebildete Abbildungsanordnung 29. Insbesondere ist der in radialer Richtung gemessene Abstand des Erfassungsbereiches 27 von der Abbildungsanordnung 29 konstant.

Um diesbezüglich die Erfassungsvorrichtung zu verbessern, sind erfindungsgemäß die beiden Spiegel 31 über die vorstehend beschriebene, für die so genannte "Rundumsicht" sorgende Bewegung hinaus derart bewegbar, dass sich der Verlauf der Strahlung und damit die Ausrichtungen des Sendebereiches 19 und des Empfangsbereiches 23 in einer zusätzlichen Weise ändern. Diese zusätzliche Bewegbarkeit der Spiegel 31 ist in Fig. 1 schematisch durch die beiden Doppelpfeile angedeutet.

Sendeseitig kann die vom Sender 43 ausgesandte Strahlung 17, die sich parallel zur bzw. zusammenfallend mit der Achse 47 durch die Sendelinse 37 hindurch ausbreitet, von dem Sendespiegel 31 derart abgelenkt werden, dass sich ein anderer Einfallswinkel der Strahlung 17 auf der Ringfläche 61 der Sendelinse 37 ergibt. Die Strahlung 17 wird folglich in einer zweiten Sendeebene 35' ausgesendet. Hierdurch resultiert eine - in Fig. 1 nicht dargestellte - Änderung der Lage des Sendebereiches 19 in Bezug auf die beiden Linsen 37, 39 und somit in Bezug auf die Erfassungsvorrichtung insgesamt. Insbesondere verändert sich der Abstand des Sendebereiches 19 von der Erfassungsvorrichtung, und zwar in Abhängigkeit von dem Einfallswinkel auf die Ringfläche 61 hin zu größeren oder kleineren Abständen.

In dem vorstehend beschriebenen Sinne wird der empfangsseitige Spiegel 31 synchron mit dem Sendespiegel 31 bewegt, so dass sich eine entsprechende Lageänderung auch des Empfangsbereiches 23 ergibt. Hierdurch ist sichergestellt, dass die Erfassungsvorrichtung empfangsseitig weiterhin stets dorthin "blickt", wo sendeseitig "hingestrahlt" wird.

Insgesamt ergibt sich damit eine Lageänderung des Erfassungsbereiches 27 in Bezug auf die Erfassungsvorrichtung.

Diese prinzipiell beliebige Verstellbarkeit der Spiegel 31 eröffnet insbesondere aufgrund des zusätzlichen Umstandes, dass dieses Verstellen im Vergleich zur Wiederholfrequenz des Senders 43 bzw. der Messfrequenz der Erfassungsvorrichtung ausreichend schnell ist, vielfältige Anwendungsmöglichkeiten. Einige hiervon sind in Fig. 2 und Fig. 3 schematisch dargestellt.

So können beispielsweise gemäß Fig. 2 durch entsprechendes Ansteuern des Sendespiegels 31 und bei entsprechend synchronisierter Bewegung des Empfangsspiegels 31 auf der Ringfläche 61 der Sendelinse 37 nacheinander Kreisbahnen 63 mit unterschiedlichem Radius durchfahren werden. Jede Kreisbahn 63 entspricht dabei einer anderen Abtastebene im Überwachungsbereich 11, wobei sich diese Abtastebenen durch ihre Höhenlage oder Elevation voneinander unterscheiden. Das Zusammenwirken des Sendespiegels 31 mit der Ringfläche 61 sorgt somit für die Elevationsfähigkeit der Erfassungsvorrichtung, also deren Eignung, den Überwachungsbereich in unterschiedlichen Höhenlagen abzutasten. Diese Eigenschaft eines Laserscanners wird auch als Mehr- oder Multiebenenfähigkeit bezeichnet.

In zeitlicher Hinsicht kann beispielsweise zunächst in einer Abtastebene eine Abtastung über einen Erfassungswinkel von 360° erfolgen, d.h. bei konstantem Einfallswinkel auf die Ringfläche 61 und somit konstantem Radius der entsprechenden Kreisbahn auf der Ringfläche 61. Nach einem vollen Umlauf über 360° um die Achse 47 wird die Neigung des Sendespiegels 31 bezüglich der Achse 47 um ein vorgegebenes Maß verändert, wodurch auf der Ringfläche 61 eine Kreisbahn 63 mit einem anderen Radius beschrieben wird und somit im Überwachungsbereich 11 eine Abtastung über einen Erfassungswinkel von 360° in einer anderen Höhenlage erfolgt. Wenn ein Umlauf, also ein 360° umfassender Abtastvorgang, gemäß der in der Praxis häufig verwendeten Sprechweise als ein "Scan" bezeichnet wird, dann erfolgt in diesem Ausführungsbeispiel die Abtastung des Überwachungsbereiches in unterschiedlichen Höhenlagen "scanweise": Jede Kreisbahn 63 auf der Ringfläche 61 entspricht dabei einem Scan.

Bei der Konzeption von Überwachungsszenarien sind dem Benutzer praktisch keine Grenzen gesetzt. Die Anzahl und die Abstände von Kreisbahnen 63 mit unterschiedlichem Radius können grundsätzlich beliebig gewählt werden. Auch ist es nicht erforderlich, nach jedem Scan den Radius der Kreisbahn 63 zu ändern. Eine Änderung der Höhenlage kann jeweils auch erst nach einer größeren Anzahl von Umläufen erfolgen.

Hinsichtlich des Begriffs "Kreisbahn" sei noch erwähnt, dass bei einem gepulst betriebenen Laserscanner, also einem im Pulsbetrieb arbeitenden Sender 43, streng genommen keine kontinuierliche bzw. ununterbrochene Kreisbahn auf der Ringfläche 61 beschrieben wird. Vielmehr erfolgt die Beaufschlagung der Ringfläche 61 aufgrund der gepulsten Betriebsweise zeitlich nacheinander an diskreten Stellen, wobei aber diese in Umfangsrichtung voneinander beabstandeten Stellen auf einem Kreis liegen. Auch eine derartige Beaufschlagung der Ringfläche 61 soll im Rahmen dieser Anmeldung als auf einer Kreisbahn erfolgend angesehen werden.

Was eine mögliche konkrete Ausgestaltung der Vorrichtung anbetrifft, so wird beispielsweise der z.B. in Form einer Laserdiode vorgesehene Sender der Sendeeinrichtung gepulst betrieben, und zwar beispielsweise mit einer Pulswiederholrate von 36 kHz. Was die längs der Ringfläche umlaufende Abtastung anbetrifft, so wird beispielsweise mit einer Winkelauflösung von 1° gearbeitet. Hierdurch ergibt sich eine so genannte Scanfrequenz von 100 Hz, d.h. der 360° umfassende Erfassungsbereich wird pro Sekunde 100 Mal mit einer Winkelauflösung von 1° abgetastet. Die bei entsprechender Orientierung der Vorrichtung in vertikaler Richtung gegebene Strahldivergenz der ausgesandten Strahlung beträgt beispielsweise 1°. Um insbesondere Nickbewegungen von Fahrzeugen zu kompensieren, hat sich ein vertikaler Öffnungswinkel der Abtastung von 4° als ausreichend erwiesen. Bei der gegeben Strahldivergenz von 1° kann also ein solcher vertikaler Bereich von 4° durch eine Mehrebenenabtastung in vier Ebenen lückenlos abgedeckt werden. Jede Ebene wird folglich in dem genannten Beispiel mit einer Scanfrequenz von 100 Hz/4 = 25 Hz abgetastet. Gleichwohl sind Anwendungen denkbar, für die eine lückenhafte vertikale Abdeckung akzeptiert werden kann. Eine derartige Anwendung ist beispielsweise die Erkennung von Situationen, in denen ein mit der erfindungsgemäßen Vorrichtung ausgestattetes Fahrzeug Gefahr läuft, einen vorausfahrenden LKW zu unterfahren, dessen Aufbau oder Ladung nach hinten übersteht. Ein derartiger Überstand kann mit einer Erfassungsvorrichtung, die lediglich in einer Ebene abtastet, welche mehr oder weniger horizontal ausgerichtet ist, nicht erkannt werden, da eine solche Ebene in der Regel auf das Fahrwerk eines LKW gerichtet ist. Um einen wie vorstehend erläuterten Überstand zu erkennen, sollte ein vertikaler Winkelbereich von wenigstens 10° abgedeckt werden können. Eine lückenhafte Abdeckung eines solchen vertikalen Winkelbereiches wäre für den geschilderten Einsatzzweck allerdings ohne weiteres ausreichend. Eine andere Anwendung, für welche eine in zwei Ebenen abtastende Vorrichtung ausreichend wäre, ist beispielsweise eine Anordnung zum Erfassen, insbesondere zum Zählen, von Personen an Durchgängen. Für derartige Anwendungen ist ebenfalls ein relativ großer Öffnungswinkel bzw. Erfassungswinkel von wenigsten 10° wünschenswert, der aber keine lückenlose Abdeckung erfordert.

Eine mögliche alternative Abtastung des Überwachungsbereiches 11 ist in Fig. 3 gezeigt. Hier wird mittels des Sendespiegels 31 auf der Ringfläche 61 eine spiralförmige Bahn 65 beschrieben. Die Abtastung beginnt bei einem kleinen Radius, wobei nach Erreichen des radial weiter außen liegenden Endes der Spirale ein Rücksprung auf den Spiralanfang erfolgt. Eine gegensinnige Abtastung ist auch möglich. Die Anzahl der Windungen der Spiralbahn 65 kann grundsätzlich beliebig sein, d.h. eine die vollständige Spirale 65 durchfahrende Abtastung kann eine grundsätzlich beliebige Anzahl von 360°-Umläufen umfassen.

Die durch die Erfindung gegebene Möglichkeit zur Änderung der Lage des Erfassungsbereiches 27 relativ zur Erfassungsvorrichtung muss nicht oder nicht ausschließlich für eine Mehrebenenabtastung, also eine Abtastung in unterschiedlichen Höhenlagen, genutzt werden. Es ist z.B. auch möglich, die Erfassungsvorrichtung dauerhaft oder für vergleichsweise lange Anwendungszeiträume mit einer konstanten Lage des Erfassungsbereiches 27 einzusetzen, d.h. lediglich mit einzigen Kreisbahn 63 (Fig. 2) zu arbeiten. Die Erfassungsvorrichtung kann aber - ohne die Notwendigkeit zu einem Umbau - jederzeit an sich ändernde äußere Bedingungen oder Wünsche des Benutzers angepasst werden, indem die Lage des Erfassungsbereiches 27 geändert wird. Dies kann durch Programmierung der Steuerung 67 erfolgen. Wenn beispielsweise in einer ersten Anwendung eine Abtastung des Überwachungsbereiches in einem Nahbereich nicht erforderlich ist, dann kann eine Kreisbahn 63 auf der Ringfläche 61 gewählt werden, die zu einer Überlappung des Sendebereiches 19 und des Empfangsbereiches 23 erst in einem größeren Abstand von der Erfassungsvorrichtung bewirkt. Eine Nahbereichsabtastung des Überwachungsbereiches kann somit entweder gezielt durchgeführt oder gezielt unterbunden werden.

Die Bewegbarkeit der Spiegel 31 kann erfindungsgemäß nicht nur zur Veränderung der Lage des Erfassungsbereiches 27 genutzt werden. Alternativ oder zusätzlich kann auch die Größe des Erfassungsbereiches 27 verändert werden. Die Größe des Erfassungsbereiches 27 bestimmt sich durch den Grad, in welchem sich der Sendebereich 19 und der Empfangsbereich 23 überlappen oder schneiden. Die Größe des Erfassungsbereiches 27 wiederum bestimmt die Intensität der Strahlung, die am Empfänger 41 detektierbar ist, und damit letztendlich die Empfindlichkeit der Erfassungsvorrichtung.

Die Geschwindigkeit, mit welcher insbesondere als Ortsauflösungsmittel 31 dienende elektrisch steuerbare diffraktive Optiken bewegt bzw. betrieben werden können, ist bezogen auf die Pulswiederholrate des Senders 43 bzw. generell auf die Geschwindigkeit, mit der aufeinander folgende Entfernungsmessungen erfolgen, ausreichend hoch, um die Ausrichtung des Sendebereiches 19 und des Empfangsbereiches 23, d.h. sowohl die Lage des Erfassungsbereiches 27 als auch die Größe des Erfassungsbereiches 27, während der Ausbreitung der Strahlung 17 zu verändern. Die Ausrichtung des Sendebereiches 19 einerseits und des Empfangsbereiches 23 andererseits können unabhängig voneinander verändert werden, um den Überlappungsgrad zwischen Sendebereich 19 und Empfangsbereich 23 und somit die Größe des Erfassungsbereiches 27 zu verändern. Einer prinzipiell synchronen Grundbewegung der beiden Ortsauflösungsmittel 31 und somit des Sendebereiches 19 und des Erfassungsbereiches 27 kann also eine Relativbewegung überlagert werden, so dass - bildlich gesprochen - die Erfassungsvorrichtung zwar stets empfangsseitig dorthin "blickt", wo die Erfassungsvorrichtung sendeseitig "hinleuchtet", wobei aber zusätzlich durch Variieren des Überlappungsgrades zwischen Sendebereich 19 und Empfangsbereich 23 gewissermaßen mit "mehr oder weniger weit geöffnetem Auge geblickt" wird.

Wie im Einleitungsteil bereits erläutert, kann hierdurch beispielsweise ein von der Entfernung zur Erfassungsvorrichtung abhängiger Verlauf der Intensität der reflektierten Strahlung 25, wie er sich bei durchgehend maximalem Überlappungsgrad ergeben würde, verändert werden, indem der Überlappungsgrad verändert wird, und zwar insbesondere dahingehend, dass die Intensität der vom Empfänger 41 detektierbaren reflektierten Strahlung über die gesamte oder zumindest einen wesentlichen Teil der Reichweite der Erfassungsvorrichtung zumindest näherungsweise konstant ist.

In Fig. 2 ist zusätzlich durch die kleinen Pfeile angedeutet, dass die vom Sender 43 ausgesandte und vom Sendespiegel 31 auf die Ringfläche 61 der Sendelinse 37 gelenkte Strahlung 17 die Sendelinse 37 während eines Umlaufs über einen Erfassungswinkel von 360° verlässt. Bei einem Betrieb mit gepulstem Sender 43 ergeben sich somit auf einem im Überwachungsbereich 11 befindlichen Gegenstand 13 zeitlich nacheinander diskrete Reflexionsorte 33, an welchen die Strahlung reflektiert wird. Alle im Erfassungsbereich 27 liegenden Reflexionsorte 33 werden zu jedem Zeitpunkt von der Empfangslinse 39 gleichzeitig "gesehen". Aufgrund der Synchronisierung des Empfangsspiegels 31 mit dem Sendespiegel 31 ist aber dafür gesorgt, dass für jede einzelne Entfernungsmessung, im praktizierten Sprachgebrauch also für jeden einzelnen "Schuss" der Laserquelle 43, nur diejenige Strahlung auf den Empfänger 41 gelangt, die an einem der Orte 33 reflektiert wird.

Generell ist zu bemerken, dass für die grundsätzlich beliebige Ausrichtung des Sendebereiches 19 und des Empfangsbereiches 23 der Einsatz der vorstehend beschriebenen, elektrisch ansteuerbaren mikromechanischen Spiegel 31 (MEMS) nicht zwingend ist. Als Alternative zu derartigen beweglichen Spiegeln 31 können auch elektrisch steuerbare diffraktive Optiken verwendet werden, wie sie ebenfalls grundsätzlich bekannt sind. Des Weiteren sind auch motorisch angetriebene taumelnde Spiegel als Ortsauflösungsmittel 31 einsetzbar.

Grundsätzlich ist es erfindungsgemäß nicht zwingend, die Ortsauflösungsmittel 31 sowohl sendeseitig als auch empfangsseitig vorzusehen. So ist es beispielsweise möglich, die Ortsauflösungsmittel 31 ausschließlich empfangsseitig einzusetzen. Dabei kann insbesondere vorgesehen sein, dass die Sendeeinrichtung dazu ausgebildet ist, zu einem oder jedem Zeitpunkt den gesamten Erfassungsbereich 27 mit ausgesandter Strahlung zu beaufschlagen.

Hierbei ist es insbesondere möglich, die gesamte wirksame Fläche der Abbildungsanordnung, in dem vorstehend beschriebenen Ausführungsbeispiel also die Ringfläche 61 der Sendelinse 37, mittels des Senders 43 bzw. einer dem Sender 43 zugeordneten geeigneten Sendeoptik zu "beleuchten", d.h. mit der Abtaststrahlung zu beaufschlagen. Hierdurch breitet sich die Abtaststrahlung zu jedem Zeitpunkt gleichzeitig in alle vorgesehenen Richtungen aus. Bei einem Erfassungswinkel von 360° kann die Abtaststrahlung folglich von allen Gegenständen, die sich um die Erfassungsvorrichtung bzw. deren Abbildungsanordnung 29 herum und innerhalb der Reichweite der Vorrichtung befinden, gleichzeitig reflektiert werden. Für die Ortsauflösung und insbesondere die gewünschte Lage des Erfassungsbereiches 27 relativ zur Abbildungsanordnung 29 wird hierbei nur auf der Empfangsseite gesorgt, und zwar unter Verwendung von Ortsauflösungsmitteln 31, beispielsweise eines elektrisch ansteuerbaren mikromechanischen Spiegels (MEMS), wie es vorstehend beschrieben wurde.

Alternativ ist es möglich, derartige Ortsauflösungsmittel 31 ausschließlich auf der Sendeseite vorzusehen und die Empfangsseite derart auszugestalten, dass stets der gesamte Erfassungsbereich 27 "gesehen", d.h. auf dem Empfänger 41 abgebildet, wird.

### Bezugszeichenliste

- 11: Überwachungsbereich
- 13: Gegenstand
- 17: ausgesandte Strahlung
- 19: Sendebereich
- 23: Empfangsbereich
- 25: reflektierte Strahlung
- 27: Erfassungsbereich
- 29: Abbildungsanordnung
- 31: Ortsauflösungsmittel, Spiegel
- 33: Reflexionsort
- 35, 35': Sendeebene
- 37: Abbildungseinrichtung, Sendelinse
- 39: Abbildungseinrichtung, Empfangslinse
- 41: Empfänger
- 43: Sender
- 45: Symmetrieebene
- 47: Achse der Abbildungsanordnung
- 55, 55': Empfangsebene
- 61: Fläche der Abbildungsanordnung, Ringfläche
- 63: Kreisbahn
- 65: Spiralbahn
- 67: Steuerung

## Patentansprüche

1. Vorrichtung zur ortsaufgelösten Erfassung von in einem Überwachungsbereich (11) befindlichen Gegenständen (13),
mit einer Sendeeinrichtung (43) zur Aussendung von elektromagnetischer Strahlung (17) in einem Sendebereich (19),
mit einer Empfangseinrichtung (41) zum Empfang von aus einem Empfangsbereich (23) reflektierter Strahlung (25),
wobei sich der Sendebereich (19) und der Empfangsbereich (23) in einem innerhalb des Überwachungsbereiches (11) gelegenen und einen Erfassungswinkel abdeckenden Erfassungsbereich (27) überlappen oder schneiden, in welchem die ausgesandte Strahlung (17) von Gegenständen (13) reflektiert wird,
mit einer im Ausbreitungsweg der ausgesandten Strahlung (17) und/oder der reflektierten Strahlung (25) gelegenen Abbildungsanordnung (29), die zu jedem Zeitpunkt den gesamten Erfassungsbereich (27) sendeseitig und/oder empfangsseitig abdeckt, und
mit Ortsauflösungsmitteln (31) zur Beeinflussung der Ausbreitungsrichtung der Strahlung (17, 25) und/oder zum Betreiben der Empfangseinrichtung (41) derart, insbesondere zeitlich variierend, dass die Lage, insbesondere der Abstand, des Erfassungsbereiches (27) relativ zur Abbildungsanordnung (29) und/oder die durch den Grad, in welchem sich der Sendebereich (19) und der Empfangsbereich (23) überlappen oder schneiden, bestimmte Größe des Erfassungsbereiches (27) veränderbar sind/ist.

2. Vorrichtung nach Anspruch 1,
**dadurch gekennzeichnet,**
**dass** sendeseitige Ortsauflösungsmittel (31) und empfangsseitige Ortsauflösungsmittel (31) synchron oder asynchron betreibbar sind,
wobei insbesondere einem synchronen Grundbetrieb der Ortsauflösungsmittel (31) zumindest zeitweise ein asynchroner Betrieb überlagerbar ist.

3. Vorrichtung nach Anspruch 1 oder 2,
**dadurch gekennzeichnet,**
**dass** die Ortsauflösungsmittel (31) im Ausbreitungsweg der Strahlung (17) zwischen einem Sender (43) der Sendeeinrichtung und der Abbildungsanordnung (29) und/oder im Ausbreitungsweg der Strahlung (25) zwischen der Abbildungsanordnung (29) und einem Empfänger (41) der Empfangseinrichtung angeordnet sind, oder Mittel zum ortsaufgelösten Betreiben eines, insbesondere als 3D-Kamera ausgebildeten, Empfängers (41) der Empfangseinrichtung umfassen.

4. Vorrichtung nach einem der vorhergehenden Ansprüche,
**dadurch gekennzeichnet,**
**dass** die Ortsauflösungsmittel (31) wenigstens ein zur Ausführung von Ablenkbewegungen ansteuerbares bewegliches optisches Element, insbesondere einen Spiegel, ein Prisma oder einen Keil, und/oder zumindest eine zur Veränderung des strahlungsbrechenden Verhaltens ansteuerbare diffraktive Optik und/oder wenigstens einen ortsaufgelöst betreibbaren Empfänger (41), insbesondere eine 3D-Kamera, bevorzugt einen PMD-Sensor, umfassen.

5. Vorrichtung nach einem der vorhergehenden Ansprüche,
**dadurch gekennzeichnet,**
**dass** der von dem Erfassungsbereich (27) abgedeckte Erfassungswinkel zumindest in einer Sendeebene (35, 35') wenigstens 90°, vorzugsweise wenigstens 180° und insbesondere bevorzugt 360° beträgt.

6. Vorrichtung nach einem der vorhergehenden Ansprüche,
**dadurch gekennzeichnet,**
**dass** die Abbildungsanordnung (29) zur Umlenkung der ausgesandten Strahlung (17) und / oder der reflektierten Strahlung (25) ausgebildet ist.

7. Vorrichtung nach einem der vorhergehenden Ansprüche,
**dadurch gekennzeichnet,**
**dass** die Abbildungsanordnung (29) wenigstens eine, insbesondere zumindest teilringförmige, Fläche (61) umfasst, wobei insbesondere mittels der Ortsauflösungsmittel (31) sendeseitig der Winkel, unter dem die von der Sendeeinrichtung ausgesandte Strahlung (17) auf die Fläche (61) auftrifft, und/oder empfangsseitig der Winkel, mit dem die von der Fläche (61) kommende Strahlung (25) auf die Ortsauflösungsmittel (31) auftrifft, veränderbar sind/ist.

8. Vorrichtung nach einem der vorhergehenden Ansprüche,
**dadurch gekennzeichnet,**
**dass** die Abbildungsanordnung (29) wenigstens ein optisch wirksames Element umfasst, insbesondere eine Linse, bevorzugt eine Panoramalinse und/oder eine omnidirektionale Linse, oder eine Strahlungsreflexionsfläche, bevorzugt einen zumindest teilkegelförmigen Spiegel.

9. Verfahren zur ortsaufgelösten Erfassung von in einem Überwachungsbereich (11) befindlichen Gegenständen (13) mittels einer Vorrichtung, insbesondere einer Vorrichtung nach einem der vorhergehenden Ansprüche, die eine Sendeeinrichtung (43) zur Aussendung von elektromagnetischer Strahlung (17) in einem Sendebereich (19) und eine Empfangseinrichtung (41) zum Empfang von aus einem Empfangsbereich (23) reflektierter Strahlung (25) umfasst,
wobei sich der Sendebereich (19) und der Empfangsbereich (23) in einem innerhalb des Überwachungsbereiches (11) gelegenen und einen Erfassungswinkel abdeckenden Erfassungsbereich (27) überlappen oder schneiden, in welchem die ausgesandte Strahlung (17) von Gegenständen (13) reflektiert wird, und
wobei die Vorrichtung eine im Ausbreitungsweg der ausgesandten Strahlung (17) und/oder der reflektierten Strahlung (25) gelegene Abbildungsanordnung (29) umfasst, die zu jedem Zeitpunkt den gesamten Erfassungsbereich (27) sendeseitig und/oder empfangsseitig abdeckt,
bei dem die Ausbreitungsrichtung der Strahlung (17, 25) derart beeinflusst und/oder die Empfangseinrichtung (41) derart betrieben wird, dass sich die Lage, insbesondere der Abstand, des Erfassungsbereiches (27) relativ zur Abbildungsanordnung (29) und/oder die durch den Grad, in welchem sich der Sendebereich (19) und/oder der Empfangsbereich (23) überlappen oder schneiden, bestimmte Größe des Erfassungsbereiches (27) verändern/verändert.

10. Verfahren nach Anspruch 9,
**dadurch gekennzeichnet,**
**dass** die Abbildungsanordnung (29) wenigstens eine, insbesondere zumindest teilringförmige, Fläche (61) umfasst, wobei insbesondere Ortsauflösungsmittel (31) sendeseitig den Winkel, unter dem die von der Sendeeinrichtung ausgesandte Strahlung (17) auf die Fläche (61) auftrifft, und/oder empfangsseitig den Winkel, mit dem die von der Fläche (61) kommende Strahlung (25) auf die Ortsauflösungsmittel (31) auftrifft, verändern.

11. Verfahren nach Anspruch 9 oder 10,
**dadurch gekennzeichnet,**
**dass** sendeseitig mittels der Ortsauflösungsmittel (31) auf einer Fläche (61) der Abbildungsanordnung (29) nacheinander eine Mehrzahl von zumindest teilkreisförmigen Bahnen (63) mit unterschiedlichem Radius und/oder eine von einem Kreis abweichende, insbesondere spiral- oder helixförmige, Bahn (65) beschrieben werden/wird.

12. Verfahren nach einem der Ansprüche 9 bis 11,
**dadurch gekennzeichnet,**
**dass** sendeseitige Ortsauflösungsmittel (31) und empfangsseitige Ortsauflösungsmittel (31) synchron oder asynchron betrieben werden, wobei insbesondere einem synchronen Grundbetrieb der Ortsauflösungsmittel (31) zumindest zeitweise ein asynchroner Betrieb überlagert wird.

13. Verfahren nach einem der Ansprüche 9 bis 12,
**dadurch gekennzeichnet,**
**dass** die Lage und/oder die Größe des Erfassungsbereiches (27) verändert wird, während sich die von der Sendeeinrichtung (43) ausgesandte Strahlung (17) ausbreitet.

14. Verfahren nach einem der Ansprüche 9 bis 13,
**dadurch gekennzeichnet,**
**dass** die Größe des Erfassungsbereiches (27) derart verändert wird, dass die Intensität der von der Empfangseinrichtung (41) empfangenen reflektierten Strahlung (25) über die Ausbreitung der von der Sendeeinrichtung (43) ausgesandten Strahlung (17) einen vorgegebenen Verlauf aufweist.

15. Verwendung einer Abbildungsanordnung (29),
die zu jedem Zeitpunkt einen Erfassungsbereich (27) sendeseitig und/oder empfangsseitig vollständig abdeckt,
insbesondere einer Panoramalinse, einer omnidirektionalen Linse oder eines zumindest teilkegelförmigen Spiegels,
in einer Vorrichtung zur ortsaufgelösten Erfassung von in einem Überwachungsbereich (11) befindlichen Gegenständen (13), insbesondere einer Vorrichtung nach einem der Ansprüche 1 bis 8,
wobei die Vorrichtung eine Sendeeinrichtung (43) zur Aussendung von elektromagnetischer Strahlung (17) in einem Sendebereich (19) und eine Empfangseinrichtung (41) zum Empfang von aus einem Empfangsbereich (23) reflektierter Strahlung (25) umfasst, wobei sich der Sendebereich (19) und der Empfangsbereich (23) in dem innerhalb des Überwachungsbereiches (11) gelegenen und einen Erfassungswinkel abdeckenden Erfassungsbereich (27) überlappen oder schneiden, in welchem die ausgesandte Strahlung (17) von Gegenständen (13) reflektiert wird,
wobei die Abbildungsanordnung (29) im Ausbreitungsweg der ausgesandten Strahlung (17) und/oder der reflektierten Strahlung (25) gelegen ist, und
wobei die Vorrichtung Ortsauflösungsmittel (31) zur Beeinflussung der Ausbreitungsrichtung der Strahlung (17, 25) und/oder zum Betreiben der Empfangseinrichtung (41) derart, insbesondere zeitlich variierend, umfasst, dass die Lage, insbesondere der Abstand, des Erfassungsbereiches (27) relativ zur Abbildungsanordnung (29) und/oder die durch den Grad, in welchem sich der Sendebereich (19) und der Empfangsbereich (23) überlappen oder schneiden, bestimmte Größe des Erfassungsbereiches (27) veränderbar sind/ist.
